(19) Europäisches Patentamt
European Patent Office
Office européen des brevets

(11) Numéro de publication: **0 169 130 B1**

(12) **FASCICULE DE BREVET EUROPEEN**

(45) Date de publication du fascicule du brevet: **22.03.89**

(51) Int. Cl.⁴: **C 08 C 19/26**, C 06 B 45/10

(21) Numéro de dépôt: **85401317.4**

(22) Date de dépôt: **28.06.85**

(54) **Polymère à insaturations éthyléniques comportant des groupements silylmétallocènes, procédé de fabrication de ce polymère, et composition propulsive ayant comme liant ce polymère.**

(30) Priorité: **20.07.84 FR 8411507**

(43) Date de publication de la demande: **22.01.86 Bulletin 86/4**

(45) Mention de la délivrance du brevet: **22.03.89 Bulletin 89/12**

(84) Etats contractants désignés: **DE FR GB IT NL SE**

(56) Documents cités: **EP-A-0 070 994**
**US-A-4 168 362**

(73) Titulaire: **SOCIETE NATIONALE DES POUDRES ET EXPLOSIFS, 12, quai Henri IV, F-75181 Paris Cédex 04 (FR)**

(72) Inventeur: **Gautier, Jean-Claude, 1, rue Brossolette, F-94480 Ablon Sur Seine (FR)**
Inventeur: **Fontanille, Michel, 3, bis rue des Coutures, F-95160 Montmorency (FR)**
Inventeur: **Raynal, Serge, Orée de Sénart Bâtiment Hérédia, F-91210 Draveil (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

EP 0 169 130 B1

**Description**

La présente invention concerne des polymères comportant des insaturations éthyléniques, sur au moins certaines desquelles sont additionnés des groupements silylmétallocènes, un procédé de fabrication de ces polymères et une composition solide propulsive ou propergol dont le liant est constitué au moins en partie par au moins un de ces polymères.

L'invention a plus particulièrement pour objet un polymère comportant des insaturations de type vinylique fixées sur la chaîne du polymère et des groupes fonctionnels terminaux, des groupements métallocènes étant additionnés sur au moins une partie des insaturations par l'intermédiaire de liaisons de type silanique.

Les composés métallocènes et notamment les ferrocènes sont utilisés depuis très longtemps dans les compositions propulsives comme catalyseur de combustion. Toutefois, ces composés étant simplement mélangés dans la composition propulsive, ils ont tendance à migrer, au cours du vieillissement, vers la surface du bloc. Cette migration induit un gradient de concentration en ferrocène dans le bloc, ce qui génère des irrégularités dans sa combustion, et en outre, peut affecter l'adhérence de l'inhibiteur sur le propergol.

De nombreuses solutions ont été proposées, pour diminuer ou éliminer la migration des ferrocènes, dans les compositions solides propulsives. Une de ces solutions consiste à modifier la molécule de ferrocène en additionnant sur celle-ci des fonctions isocyanates ou hydroxyles, ces fonctions réagissant ensuite sur les groupements terminaux du polymère, par exemple les fonctions hydroxyles ou carboxyles d'un polybutadiène hydroxytéléchélique ou carboxytéléchélique.

Cette solution est décrite, notamment, dans les brevets US no 3 932 240 et 3 843 700. Ainsi, les composés ferrocènes, liés chimiquement au polymère, ne migrent plus dans la composition propulsive. Toutefois, cette solution présente deux inconvénients importants. En effet, soit elle ne permet d'incorporer qu'une très faible quantité de ferrocène dans la composition, étant donné que le nombre de fonctions terminales libres dans le polymère réticulé est très faible par rapport à la masse de ce polymère, soit, si l'on fixe le ferrocène sur le prépolymère, elle entraîne une diminution importante du nombre de fonctions terminales, et ne permet pas d'obtenir une composition polymérisée présentant des caractéristiques mécaniques convenables.

Il a également été proposé de réaliser un polymère obtenu par polymérisation d'un composé du ferrocène, tel que le vinylferrocène, avec le butadiène pour donner un polymère à terminaisons carboxyliques. Cette solution ne permet pas d'incorporer une quantité suffisante de fer, si l'on veut conserver à la composition polymérisée des propriétés mécaniques suffisantes.

Il a également été proposé dans le brevet US-A-4 168 362 un polymère obtenu en faisant réagir un prépolymère polybutadiène à terminaisons hydroxyles avec un ferrocenyl thiol. Cepentant les groupements thiols se fixent sur les groupements fonctionnels terminaux sans qu'il soit possible d'exercer un contrôle sur ce greffage terminal. La fonctionnalité de ce polymère en groupement OH est médiocre et sa réticulation difficile.

Enfin, dans une autre solution illustrée par le brevet US n° 4 023 994 il a été proposé de fixer le ferrocène sur le plastifiant ajouté à la composition propulsive. Toutefois, ce procédé ne supprime pas la migration du catalyseur de combustion dans la composition de propergol.

L'invention a pour but de remédier à tous ces inconvénients en proposant un polymère comportant des groupements métallocènes, et notamment des groupements ferrocènes, fixés sur sa chaîne sans que les fonctions terminales du polymère soient affectées; en conséquence, les caractéristiques mécaniques du polymère réticulé ne seront pas ou que faiblement affectées. La quantité de métallocène ou la teneur en métal du polymère obtenue est élevée, et permet la réalisation d'une composition propulsive ayant comme liant ce polymère et présentant une teneur en métal convenable pour obtenir les vitesses de combustion élevées.

A cet effet, le polymère proposé par l'invention comporte des insaturations éthyléniques et/ou des insaturations de type vinylique, sur au moins certaines desdites insaturations vinyliques sont additionnés des groupements de formule (I) suivante:

$$-\overset{\displaystyle R_3}{\underset{\displaystyle R_2}{\overset{|}{\underset{|}{Si}}}}-R_1-(C_5H_4)M(C_5H_5) \qquad (I)$$

dans laquelle:

M représente un métal de transition choisi dans le groupe comprenant le fer, l'osmium, le ruthénium, le nickel, le cobalt, le manganèse ou le titane;

$R_1$ représente un reste aliphatique substitué ou non, un reste aromatique substitué ou non;

$R_2$, $R_3$ qui peuvent être différents ou identiques, représentent un reste aliphatique substitué ou non, un reste aromatique substitué ou non, un groupement $-[R_1-(C_5H_4)M(C_5H_5)]$.

Les groupements de formule (I) sont appelés «groupements silylmétallocènes».

Les insaturations de type vinylique sont portées soit par les carbones de la chaîne du polymère, soit sont présentes dans des substituants portés par des carbones de la chaîne du polymère, ces substituants étant des composés hydrocarbonés comportant de 1 à 10 atomes de carbone.

Avantageusement, les insaturations de type vinylique sont portées par les atomes de carbone constituant la chaîne du polymère, les atomes de carbone terminaux portant des groupes fonctionnels.

Ainsi, les groupements silylmétallocènes sont additionnés uniquement sur les insaturations de type vinylique pendantes, et ne réagissent pas

avec les groupes fonctionnels terminaux du polymère. De ce fait il est possible de réticuler ce polymère par l'intermédiaire de ses groupes fonctionnels terminaux et également par les insaturations éthyléniques non saturées par les groupements silylmétallocènes.

Toutefois, il est possible, selon l'invention, et si on le désire, d'additionner les groupements silylmétallocènes sur des insaturations éthyléniques contenues dans la chaîne du polymère. Dans ce cas, selon la nature des fonctions terminales du polymère, des groupements silylmétallocènes pourront réagir avec ces fonctions terminales. Il en est ainsi quand ces fonctions terminales sont des groupes hydroxyles, carboxyles ou des insaturations de type vinylique, par exemple.

En conséquence, les polymères convenant à l'invention sont les polymères contenant des insaturations éthyléniques dans leur chaîne, et/ou des insaturations de type vinylique pendantes ou terminales, avec ou sans groupes fonctionnels terminaux. On peut citer à titre d'exemple de polymères convenables à l'invention, les polymères obtenus par polymérisation ou copolymérisation de composés diéniques tels que les polybutadiènes, polyisoprènes par exemple, les polymères insaturés obtenus par condensation.

Les polymères convenables pour le mode de réalisation préféré de l'invention sont les polymères contenant des insaturations éthyléniques dont au moins certaines sont de type vinylique et sont pendantes par rapport à la chaîne du polymère. De tels polymères sont obtenus par polymérisation ou copolymérisation de composés diéniques, tels que les polybutadiènes à polymérisation 1–2 et 1–4, les polyisoprènes à polymérisation 1–2, 3–4 et 1–4.

Avantageusement, ces polymères ont des groupes fonctionnels terminaux par exemple des groupes hydroxyles ou carboxyles.

Les polymères préférés de l'invention, sont les polybutadiènes hydroxytéléchéliques ou carboxytéléchéliques contenant des insaturations de type vinylique.

Les groupements silylmétallocènes sont additionnés sur le nombre désiré d'insaturations de type vinylique contenues dans le polymère. Ainsi, on peut additionner ces groupements sur la totalité des insaturations de type vinylique, les groupes fonctionnels terminaux du polymère n'étant pas affectés. Les groupes fonctionnels du polymère, par exemple les groupes hydroxyles d'un polybutadiène hydroxytéléchélique ou les groupes carboxyles d'un polybutadiène carboxytéléchélique ne réagissent pas avec les groupements silylmétallocènes et sont donc libres pour participer à la réticulation du polymère en présence d'un réticulant tel qu'un polyisocyanate ou un polyépoxyde.

Les groupements silylmétallocènes préférés de l'invention sont les groupements silylferrocènes de formule I avec M représentant l'atome de fer.

Les radicaux $R_2$, $R_3$ sont de préférence des radicaux méthyl, éthyl, ou le groupement $-[R_1-(C_5H_4)\ Fe\ (C_5H_5)]$.

Le radical $R_1$ peut être une chaîne méthylénique substituée ou non, un radical phénylène, benzylidène ou benzylène.

Dans le mode de réalisation préféré de l'invention, le radical $R_1$ représente une chaîne méthylénique de formule $-(-CH_2-)-_n$, dans laquelle n est compris entre 1 et 6.

Ces polymères contenant des groupements silylmétallocènes peuvent être utilisés dans de nombreuses applications et notamment, pour constituer partiellement ou en totalité le liant d'une composition solide propulsive, cette application étant un autre objet de la présente invention.

En effet, les propergols dits composites sont constitués essentiellement d'un liant inerte tel que, par exemple, un polymère à base de polybutadiène hydroxytéléchélique (PBHT) ou carboxytéléchélique (PBCT) réticulé avec un polyisocyanate ou un polyépoxy, d'un oxydant, le plus souvent un oxydant minéral tel que le perchlorate d'ammonium par exemple, et éventuellement un combustible tel que l'aluminium, par exemple.

Les propergols composites comprennent également de nombreux additifs tels que des plastifiants, des antioxydants, des catalyseurs de polymérisation, et des catalyseurs de combustion. Comme catalyseurs de combustion, on utilise généralement des métallocènes et de préférence des ferrocènes.

Dans la composition propulsive conforme à l'invention, le propergol composite comprend les mêmes éléments que ceux décrits ci-dessus et couramment employés. Toutefois le liant inerte est constitué totalement ou en partie, par un polymère conforme à l'invention, portant des groupements silylmétallocènes.

De ce fait, il n'est plus nécessaire d'ajouter à la composition propulsive un catalyseur de combustion, celui-ci étant fixé directement sur le polymère.

Par ailleurs, le polymère conforme à l'invention est réticulé avec un système de réticulation identique à celui utilisé pour la réticulation des polymères classiques. Ainsi, pour un polybutadiène hydroxytéléchélique portant des groupements silylmétallocènes, l'agent de réticulation est un polyisocyanate, tel que le toluène diisocyanate, l'isophorone diisocyanate, l'hexaméthylène diisocyanate, le triméthylhexane diisocyanate, le méthyl dicyclohexoyle diisocyanate, par exemple. De manière analogue, pour un polybutadiène carboxytéléchélique conforme à l'invention, l'agent de réticulation est un polyépoxyde, par exemple, l'Epon(R) 812 commercialisé par la Société Shell ou un polyaziridine, par exemple, le tris (méthyl 2-aziridinyl 1) phosphine oxyde (MAPO).

Le taux de catalyseur de combustion dans le propergol qui est généralement exprimé par le taux de métal, par exemple par le taux de fer, dans la composition, peut être contrôlé par, d'une part la quantité de polymère contenue dans le propergol, et d'autre part le nombre de groupements silylmétallocènes fixés sur chaque molécule de polymère. De plus, il est généralement possible

d'augmenter la teneur en métal en fixant des groupements silylmétallocènes contenant des radicaux $R_2$, $R_3$ représentant le groupement $-[R_1-(C_5H_4)M(C_5H_5)]$. Il est ainsi possible d'obtenir des polymères PBHT contenant de 3% environ à 15% environ, en poids de métal, et des propergols contenant, en poids, de 0,2% à 4% environ de métal.

Comme cela sera illustré dans les exemples ci-dessus, les propriétés mécaniques des propergols conformes à l'invention sont convenables et de même ordre que celles d'un propergol obtenu avec un polymère classique.

Par ailleurs, les caractéristiques de la combustion de ces compositions tant du point de vue de la vitesse de combustion, que de celui de l'exposant de pression sont du même ordre que celles des propergols composites à liant constitué par des polymères classiques et pour un taux de métal, par exemple de fer, équivalent, le métal étant apporté par l'addition de catalyseurs de combustion dans les propergols composites de l'art antérieur.

Enfin, dans les compositions propulsives de l'invention, on n'observe plus le phénomène de jaunissement des faces du bloc de propergol ou de la couche inhibitrice appliquée sur le bloc de propergol, provoqué par la migration du catalyseur de combustion. Cette observation montre un des résultats importants de l'invention, à savoir la fixation du catalyseur de combustion dans la composition propulsive, et cela sans altération sensible des propriétés mécaniques de la composition et de ses caractéristiques de combustion.

Par ailleurs, les propergols conformes à l'invention sont obtenus selon un procédé de fabrication usuel, analogue à celui utilisé pour la fabrication des propergols composites à liant en polymère ne portant pas de groupements silylmétallocènes. Ce procédé est illustré dans les exemples ci-dessous.

La présente invention propose également un procédé de fabrication des polymères conformes à l'invention.

Ce procédé consiste dans une première étape, à faire réagir, en présence de catalyseur d'hydrosilylation, un polymère comportant des insaturations éthyléniques, avec un composé silylmétallocène de formule suivante:

$$H-\underset{R_3}{\overset{R_2}{\underset{|}{\overset{|}{Si}}}}-R_1-(C_5H_4)M(C_5H_5) \qquad (II)$$

dans laquelle $R_1$, $R_2$, $R_3$ et M ont les mêmes significations que dans la formule (I) indiquée précédemment; puis dans une seconde étape à précipiter le polymère résultant par addition dans le milieu réactionnel d'un composé ou mélange ne dissolvant pas ledit polymère résultant; et dans une troisième étape à séparer et récupérer le polymère résultant par, par exemple, décantation, filtration, centrifugation, ou par tout autre procédé de séparation adapté.

Les catalyseurs d'hydrosilylation convenables pour l'invention sont les péroxydes, le platine, l'acide hexachloroplatinique ($H_2PtCl_6$, $6H_2O$), les métaux carbonyles tels que le cobalt carbonyle, le nickel-carbonyle, et analogues. Le catalyseur préféré de l'invention est l'acide hexachloroplatinique.

Les composés ou mélanges de composés convenables pour précipiter le polymère produit par la réaction de la première étape sont le méthanol, l'éthanol, l'acétone, un mélange acétone-éthanol ou tout autre composé ou mélange ne dissolvant pas le polymère transformé, mais étant des solvants des produits de départ et du catalyseur.

La première étape peut être conduite en milieu hétérogène et sans solvant, ou en milieu homogène par l'addition aux produits de départ d'un solvant ou mélange de solvants commun au polymère et au silylmétallocène.

Les solvants préférés de l'invention sont le tétrahydrofuranne, le benzène, le toluène, l'hexane, le tétrachlorure de carbone.

La réaction est réalisée à une température, comprise entre $-5\,°C$ environ et $90\,°C$ environ selon le solvant utilisé et le taux désiré de transformation des doubles liaisons.

La quantité de silylmétallocène mise en œuvre correspond à la quantité stœchiométrique nécessaire pour transformer le nombre de doubles liaisons désiré. Avantageusement, on ajoute un excès d'environ 10% de silylmétallocène par rapport à la quantité stœchiométrique.

Les conditions ci-dessus correspondent au mode de réalisation préféré de l'invention, et permettent d'additionner les groupements silylmétallocènes principalement sur les doubles liaisons de type vinylique sans réaction avec les groupes fonctionnels terminaux, et sans provoquer une réticulation ou un pontage qui augmenterait le poids moléculaire du prépolymère et donc sa viscosité.

Il est également possible selon l'invention, d'additionner des groupements silylmétallocènes sur les doubles liaisons contenues dans la chaîne du prépolymère, en conduisant la réaction à des températures supérieures à 90 °C ou par le choix du catalyseur, de la concentration de celui-ci dans le milieu réactionnel et du temps de réaction.

Pour extraire le prépolymère modifié du milieu réactionnel, dans le mode de réalisation préféré de l'invention, on précipite le prépolymère en additionnant le milieu réactionnel dans un mélange acétone-méthanol. On récupère le précipité par décantation et centrifugation. Il est également possible d'ajouter le mélange acétone-méthanol dans le milieu réactionnel.

Avantageusement, on évapore le résidu de solvant par évaporation sous vide.

Les composés silylmétallocènes de formule (II) peuvent être obtenus par différents procédés, notamment par les procédés décrits dans les brevets français n° 1 398 255 et 1 456 277, ou par le procédé décrit dans le brevet européen EP-A-171 307.

Les exemples ci-dessous, donnés uniquement à titre indicatif, illustrent plus clairement l'invention. Dans ces exemples, le symbole Fc représente le radical $(C_5H_5)Fe(C_5H_4-)-$.

Exemple 1

– Préparation d'un prépolymère polybutadiène hydroxytéléchélique portant des groupements diméthylsilyltétraméthylène ferrocène.

On additionne 50 g de prépolymère polybutadiène hydroxytéléchélique commercialisé par la société ARCO sous la dénomination «R 45M», ce polymère ayant une température vitreuse de −80 °C, dans 1,8 l d'hexane sec (28 g/l de prépolymère).

On chauffe le mélange sous agitation à 60 °C, puis on ajoute 1 ml de solution alcoolique d'acide hexachloroplatinique.

On additionne ensuite 15 g de

$CH_3$
|
$Fc-(CH_2)_4-Si-H$
|
$CH_3$

dissous dans 20 ml d'hexane, représentant la quantité théorique pour saturer 15% des insaturations totales du prépolymère, additionnée d'un excès de l'ordre de 10%.

La température est maintenue pendant 24 heures à 60 °C, puis le mélange est refroidi à température ambiante.

On ajoute le milieu réactionnel dans un mélange acétone-méthanol pour précipiter le prépolymère modifié. Ce dernier est ensuite récupéré par décantation et centrifugation.

L'avancement de la réaction d'hydrosilylation est suivi par analyse spectrale Infra-rouge, et notamment par la disparition de la bande à 2100 $cm^{-1}$ correspondant à la liaison Si–H.

Le taux de modification des doubles liaisons du prépolymère est déterminé par le dosage du ferrocène greffé. Celui-ci est réalisé par analyse RMN en introduisant un étalon, par exemple le benzène, dans le polymère modifié, et à comparer les pics respectifs du benzène et du ferrocène greffé.

Dans l'exemple ci-dessus, on observe que 11,1% des doubles liaisons ont été modifiées, ce qui correspond à un rendement de 74% par rapport au composé silylferrocène engagé.

L'analyse RMN montre également que dans l'exemple ci-dessus environ 56% des doubles liaisons de type vinylique ont été modifiées, tandis que seulement 1% environ des doubles liaisons éthyléniques (diéniques) ont été saturées.

De plus, l'analyse par chromatographie par perméation de gel montre qu'aucune réaction de pontage ne s'est produite lors de la modification du prépolymère.

En outre, le dosage des fonctions hydroxyles terminales du prépolymère modifié indique que sa fonctionnalité (environ 2,3) est sensiblement égale à celle du prépolymère de départ.

Par ailleurs, la température de transition vitreuse du prépolymère modifié est de l'ordre de −60 °C.

Exemple 2

Selon le même procédé que dans l'exemple 1 et avec les mêmes produits de départ, mais en ajoutant seulement 10,5 g de:

$CH_3$
|
$Fc-(CH_2)_4-Si-H$,
|
$CH_3$

représentant la quantité théorique pour obtenir une modification de 10% des insaturations totales du prépolymère PBHT, on a obtenu un prépolymère modifié ayant 7,7% de ces double liaisons saturées (38% des liaisons vinyliques et 0,5% des liaisons éthyléniques), ce qui correspond à un rendement de 77% par rapport au composé silylferrocène engagé.

La température de transition vitreuse de ce prépolymère modifié est de −65 °C.

Exemple 3

On répète les opérations de l'exemple 1, mais en mettant en œuvre 100 g de prépolymère polybutadiène hydroxytéléchélique et 150 g de

$CH_3$
|
$Fc-(CH_2)_4-Si-H$.
|
$CH_3$

Cette quantité de silylferrocène permet de saturer la totalité des liaisons de type vinylique du prépolymère et d'obtenir ainsi un taux de fer dans le polymère de 9,9%.

L'analyse du polymère obtenu montre que 100% des liaisons vinyliques ont été saturées tandis que l'addition du silylferrocène a été effectuée sur moins de 1% des liaisons de type éthylénique.

Le taux de fer mesuré dans le polymère est de 9,6%, ce qui correspond à un rendement de 95% par rapport au composé silylferrocène engagé.

La température de transition vitreuse de ce prépolymère est de −60 °C.

Exemples 4, 5

De manière identique aux exemples 1, 2 on a réalisé un prépolymère modifié, en utilisant un diméthylsilylbenzylferrocène à la place du diméthylsilyl tétraméthylène ferrocène.

Les résultats obtenus rassemblés dans le tableau ci-dessous, sont semblables à ceux obtenus dans les exemples 1, 2.

| taux d'insaturations modifiées | | Rendement par rapport au silylferrocène | Tv |
|---|---|---|---|
| % théorique | % mesuré | | |
| 15% | 10,3% | 72% | −50 °C |
| 10% | 7,7% | 77% | −55 °C |

Exemples 6, 7

Selon le même procédé que celui décrit dans l'exemple 1, mais en utilisant comme silylferrocène, les composés suivants:

a) 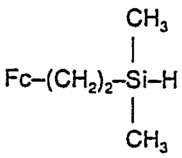 b) $[Fc-(CH_2)_4]_3-Si\ H$

on prépare un prépolymère PBHT modifié, ayant une teneur de 3% en poids de fer.

Les prépolymères modifiés obtenus ont comme température de transition vitreuse −71 °C avec le composé a et −74 °C avec le composé b.

Exemple 8

On prépare un prépolymère polybutadiène carboxytéléchélique modifié par greffage de:

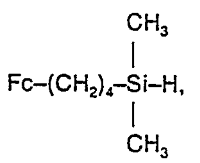

selon un mode opératoire identique à celui de l'exemple 1.

Le taux de doubles-liaisons saturées est de l'ordre de 1,90%.

Exemple 9

Le prépolymère modifié obtenu à l'exemple 1 est utilisé comme liant dans une composition propulsive appelée composite.

Ainsi, un propergol ayant la composition pondérale suivante:

| | |
|---|---|
| – prépolymère modifié | 13 |
| – méthyldicyclohexyl diisocyanate | 1,20 |
| – perchlorate d'ammonium | 80 |
| – aluminium | 2 |
| – dibutyldilaurate d'étain | 0,20 |
| – plastifiant | 3,60 |

a été réalisé, selon la méthode classique de préparation des compositions de propergol, appelée méthode globale.

Le taux de fer dans le propergol est de 0,94%.

Les propriétés mécaniques du propergol obtenu sont:

| | |
|---|---|
| Résistance maximale à la traction Sm (MPa): | 1 |
| Allongement élastique ε: | 28% |
| Allongement minimal à la traction maximale ρm: | 31% |
| Allongement à la rupture ρr: | 33% |

Des essais de tir réalisés en strand burner on montré que la vitesse de combustion V de cette composition est du même ordre que celle obtenue pour des propergols composites contenant un catalyseur de combustion non lié chimiquement au polymère. De plus, comme les résultats rassemblés dans le tableau I ci-dessous le montrent, l'exposant de pression *n*, dans l'expression $V+aP^n$, est faible pour les valeurs de vitesse de combustions mesurées.

| P (MPa) | V (mm/s) | n |
|---|---|---|
| 3 | 41,7 | |
| 7 | 55,9 | 0,44 |
| 12 | 78,8 | |
| 20 | 92,6 | |

Dans l'expression ci-dessous, P représente la pression de combustion a étant le coefficient de pression.

Un autre résultat important de l'invention est observé visuellement. En effet, dans des blocs de propergol contenant un catalyseur de combustion non lié, la migration de ce catalyseur se traduisait par un jaunissement de l'inhibiteur et une combustion non uniforme sur la section du bloc. Dans un block réalisé avec un propergol conforme à l'invention, ce phénomène de vieillissement n'est plus observé, ce qui augmente la durée de vie de ces blocs et permet d'obtenir une vitesse de combustion sensiblement homogène sur la section du bloc.

**Revendications**

1. Polymère comportant des insaturations éthyléniques et/ou des insaturations de type vinylique, caractérisé en ce qu'il comprend, additionnés sur au moins certaines desdites insaturations vinyliques, des groupements silylmétallocènes de formule:

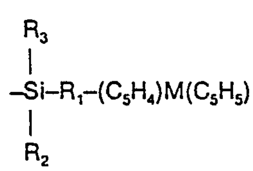 (I)

dans laquelle:

M représente un métal de transition choisi dans le groupe comprenant le fer, l'osmium, le ruthénium, le nickel, le cobalt, le manganèse ou le titane.

$R_1$ représente un reste aliphatique substitué ou non, un reste aromatique substitué ou non.

$R_2$, $R_3$ qui peuvent être différents ou identiques, représentent un reste aliphatique substitué ou non, un reste aromatique substitué ou non, un groupement $-[R_1-(C_5H_4)M(C_5H_5)]$.

2. Polymère selon la revendication 1, caractérisé en ce que les insaturations de type vinylique précitées sont portées par les atomes de carbone constituant la chaîne du polymère, les atomes de carbone terminaux portant des groupes fonctionnels différents.

3. Polymère selon la revendication 2, caractérisé en ce que le poylmère précité est un polybutadiène comportant au moins des insaturations de type vinylique, et des groupes fonctionnels terminaux choisis dans le groupe comportant les groupes hydroxyles et carboxyles.

4. Polymère selon l'une des revendications précédentes, caractérisé en ce que le groupement silylmétallocène précité est un groupement silylferrocène, M représentant l'atome de fer dans la formule (I).

5. Polymère selon l'une des revendications précédentes, caractérisé en ce que dans la formule (I) précitée, le radical $R_1$ représente une chaîne carbonée aliphatique de formule $(CH_2)_n$ dans laquelle n est compris entre 1 et 6.

6. Procédé de fabrication d'un polymère selon l'une des revendications précédentes, caractérisé en ce qu'il comprend les étapes suivantes:

a) faire réagir, en présence d'un catalyseur d'hydrosilylation, un polymère comportant des insaturations éthyléniques et/ou des insaturations vinyliques, avec un composé silylmétallocène de formule suivante:

$$\begin{array}{l} \quad\;\; R_2 \\ \quad\;\; | \\ H-Si-R_1-(C_5H_4)M(C_5H_5) \\ \quad\;\; | \\ \quad\;\; R_3 \end{array} \qquad (II)$$

dans laquelle:

M représente un métal de transition choisi dans le groupe comprenant le fer, l'osmium, le ruthénium, le nickel, le cobalt, le manganèse ou le titane;

$R_1$ représente un reste aliphatique substitué ou non, un reste aromatique substitué ou non;

$R_2$, $R_3$ qui peuvent être différents ou identiques, représentent un reste aliphatique substitué ou non, un reste aromatique substitué ou non, un groupement $-[R_1-(C_5H_4)M(C_5H_5)]$.

b) précipiter le polymère résultant par mélange du milieu réactionnel avec un composé ou mélange de composés non solvant dudit polymère;

c) séparer ledit polymère précipité du milieu réactionnel.

7. Procédé selon la revendication 6, caractérisé en ce qu'il consiste à ajouter un solvant commun au polymère et au composé silylmétallocène pour réaliser l'étape a précitée d'hydrosilylation.

8. Procédé selon la revendication 7, caractérisé en ce que le solvant commun précité est choisi dans le groupe comprenant le tétrahydrofuranne, le benzène, le toluène, l'hexame, le tétrachlorure de carbone.

9. Procédé selon la revendication 6, caractérisé en ce que l'étape a précitée est réalisée en milieu hétérogène.

10. Procédé selon l'une des revendications 6 à 9 caractérisé en ce que l'étape a précitée est réalisée à une température comprise entre −5 °C et +90 °C.

11. Procédé selon l'une des revendications 6 à 10, caractérisé en ce que le nombre de moles de composé silylmétallocène ajouté par mole de polymère est égal au nombre d'insaturations de type vinylique contenues dans une mole de polymère sur lesquelles on désire additionner ledit composé silylmétallocène, augmenté d'un excès de 10% environ.

12. Procédé selon l'une des revendications 6 à 11, caractérisé en ce que le composé non solvant précité utilisé dans l'étape b est choisi dans le groupe comprenant le méthanol, l'éthanol, l'acétone, un mélange acétone-méthanol.

13. Composition solide propulsive comprenant notamment un liant inerte, un oxydant, un combustible, un plastifiant, des additifs, caractérisée en ce que ledit liant inerte est constitué au moins en partie par un polymère selon l'une des revendications 1 à 5.

14. Composition propulsive selon la revendication 13, caractérisée en ce que le polymère précité est un polybutadiène à terminaisons hydroxyles ou carboxyles, ladite composition contenant de 0,2 à 4% en poids de métal additionné par mole de polymère.

15. Composition propulsive selon la revendication 14, caractérisée en ce que le liant inerte est constitué par le polymère précité.

16. Composition propulsive selon la revendication 14, caractérisée en ce que les groupements silylmétallocènes portés par le polymère précité sont des groupements silylferrocènes, la teneur en fer dans ledit polymère étant comprise entre 3 et 15%.

**Claims**

1. Polymer comprising ethylenic unsaturations and/or unsaturations of vinyl type, characterized in that it comprises, added to at least some of the said vinyl unsaturations, silylmetallocene groups of formula:

$$\begin{array}{l} \quad R_3 \\ \quad | \\ -Si-R_1-(C_5H_4)M(C_5H_5) \\ \quad | \\ \quad R_2 \end{array} \qquad (I)$$

in which:

M denotes a transition metal chosen from the group comprising iron, osmium, ruthenium, nickel, cobalt, manganese or titanium.

$R_1$ denotes an aliphatic residue, substituted or otherwise or an aromatic residue, substituted or otherwise.

$R_2$, $R_3$, which may be different or identical, denote an aliphatic residue, substituted or otherwise, an aromatic residue, substituted or otherwise, or a group $-[R_1-(C_5H_4)M(C_5H_5)]$.

2. Polymer according to Claim 1, characterized in that the abovementioned unsaturations of vinyl type are carried by carbon atoms from the polymer chain, the end carbon atoms carrying different functional groups.

3. Polymer according to Claim 2, characterized in that the abovementioned polymer is a polybutadiene containing at least unsaturations of vinyl type, and end functional groups chosen from the group comprising hydroxyl and carboxyl groups.

4. Polymer according to one of the preceding claims, characterized in that the abovementioned silylmetallocene group is a silylferrocene group, M denoting the iron atom in the formula (I).

5. Polymer according to one of the preceding claims, characterized in that, in the abovementioned formula (I), the radical $R_1$ denotes an aliphatic carbon chain of formula $(CH_2)_n$ in which n is between 1 and 6.

6. Process for the manufacture of a polymer according to one of the preceding claims, characterized in that it comprises the following steps:

a) reacting, in presence of hydrosilylation catalyst, a polymer containing ethylenic unsaturations and/or vinyl unsaturations with a silylmetallocene compound of the following formula:

$$\begin{array}{l} \quad\;\; R_2 \\ \quad\;\; | \\ H-Si-R_1-(C_5H_4)M(C_5H_5) \\ \quad\;\; | \\ \quad\;\; R_3 \end{array} \qquad (II)$$

in which:

M denotes a transition metal chosen from the group comprising iron, osmium, ruthenium, nickel, cobalt, manganese or titanium;

$R_1$ denotes an aliphatic residue, substituted or otherwise or an aromatic residue, substituted or otherwise;

$R_2$ and $R_3$, which may be different or identical, denote an aliphatic residue, substituted or otherwise, an aromatic residue, substituted or otherwise, or a group $[-R_1-(C_5H_4)M(C_5H_5)]$;

b) precipitating the resultant polymer by mixing the reaction mixture with a compound or mixture of compounds not being a solvent for the said polymer;

c) separating the said precipitated polymer from the reaction medium.

7. Process according to Claim 6, characterized in that it consists in adding a solvent which is common to the polymer and to the silylmetallocene compound to perform the abovementioned hydrosilylation step a.

8. Process according to Claim 7, characterized in that the abovementioned common solvent is chosen from the group comprising tetrahydrofuran, benzene, toluene, hexane and carbon tetrachloride.

9. Process according to Claim 6, characterized in that the abovementioned step a is carried out in a heterogeneous medium.

10. Process according to one of Claims 6 to 9, characterized in that the abovementioned step a is performed at a temperature of between −5 °C and +90 °C.

11. Process according to one of Claims 6 to 10, characterized in that the number of moles of silylmetallocene compound added per mole of polymer is equal to the number of unsaturations of vinyl type present in one mole of polymer onto which it is desired to add the said silylmetallocene compound, increased by an excess of approximately 10%.

12. Process according to one of Claims 6 to 11, characterized in that the abovementioned nonsolvent compound employed in step b is chosen from the group comprising methanol, ethanol, acetone and an acetone-methanol mixture.

13. Solid propellent composition comprising in particular an inert binder, an oxidizing agent, a fuel, a plasticizer and additives, characterized in that the said inert binder consists at least partially of a polymer according to one of Claims 1 to 5.

14. Propellent composition according to Claim 13, characterized in that the abovementioned polymer is a polybutadiene with hydroxyl or carboxyl ends, the said composition containing from 0.2 to 4% by weight of added metal per mole of polymer.

15. Propellent composition according to Claim 14, characterized in that the inert binder consists of the abovementioned polymer.

16. Propellent composition according to Claim 14, characterized in that the silylmetallocene groups carried by the abovementioned polymer are silylferrocene groups, the iron content of the said polymer being between 3 and 15%.

**Patentansprüche**

1. Polymer mit Ethylen- und/oder Vinyl-Doppelbindungen, dadurch gekennzeichnet, daß zumindest einige der Vinylbindungen Silylmetallocengruppen der Formel (I) tragen

$$\begin{array}{l} \quad R_3 \\ \quad | \\ -Si-R_1-(C_5H_4)M(C_5H_5) \\ \quad | \\ \quad R_2 \end{array} \qquad (I)$$

in der bedeuten:

M ein Übergangsmetall, ausgewählt unter Eisen, Osmium, Ruthenium, Nickel, Kobalt, Mangan oder Titan,

$R_1$ einen ggfs. substituierten aliphatischen oder aromatischen Rest,

$R_2$ und $R_3$, gleich oder verschieden, einen ggfs. substituierten aliphatischen oder aromatischen Rest oder einen Rest der Formel $-[R_1-(C_5H_4)M(C_5H_5)]$.

2. Polymer nach Anspruch 1, dadurch gekennzeichnet, daß die Vinylbindungen von den die Polymerkette bildenden Kohlenstoffatomen getragen werden und die Endkohlenstoffatome verschiedene funktionelle Gruppen aufweisen.

3. Polymer nach Anspruch 2, dadurch gekennzeichnet, daß das Polymer ein Polybutadien mit zumindest Vinylbindungen ist und die funktionellen Endgruppen unter Hydroxyl- und Carboxylgruppen ausgewählt sind.

4. Polymer nach einem der vorstehenden Ansprüche, dadurch gekennzeichnet, daß die Silylmetallocengruppe Silylferrocen ist, wobei M in Formel (I) Eisen bedeutet.

5. Polymer nach einem der vorstehenden Ansprüche, dadurch gekennzeichnet, daß in Formel (I) $R_1$ eine aliphatische Kohlenwasserstoffkette der Formel $(CH_2)_n$ ist, in der n 1 bis 6 bedeutet.

6. Verfahren zur Herstellung eines Polymers nach einem der vorstehenden Ansprüche, gekennzeichnet durch folgende Stufen:

a) Umsetzen in Gegenwart eines Hydrosilylierungskatalysators eines Polymers mit Ethylen- und/oder Vinyl-Doppelbindungen mit einem Silylmetallocen der folgenden Formel (II)

$$H{-}\overset{\displaystyle R_2}{\underset{\displaystyle R_3}{Si}}{-}R_1{-}(C_5H_4)M(C_5H_5) \qquad (II)$$

in der bedeuten:

M ein Übergangsmetall, ausgewählt unter Eisen, Osmium, Ruthenium, Nickel, Kobalt, Mangan oder Titan,

$R_1$ einen ggfs. substituierten aliphatischen oder aromatischen Rest,

$R_2$ und $R_3$, gleich oder verschieden, einen ggfs. substituierten aliphatischen oder aromatischen Rest oder einen Rest der Formel $-[R_1-(C_5H_4)M(C_5H_5)]$,

b) Ausfällen des entstandenen Polymers durch Vermischen des Reaktionsmediums mit einer Verbindung oder einem Gemisch von Verbindungen, in der (dem) das Polymer löslich ist,

c) Abtrennen des ausgefällten Polymers vom Reaktionsmedium.

7. Verfahren nach Anspruch 6, gekennzeichnet durch Zugabe eines dem Polymer und dem Silylmetallocen gemeinsamen Lösungsmittel zur Durchführung der Hydrosilylierungsstufe a).

8. Verfahren nach Anspruch 7, dadurch gekennzeichnet, daß das gemeinsame Lösungsmittel unter Tetrahydrofuran, Benzol, Toluol, Hexan oder Tetrachlorkohlenstoff gewählt wird.

9. Verfahren nach Anspruch 6, dadurch gekennzeichnet, daß die Stufe a) in einem heterogenen Medium durchgeführt wird.

10. Verfahren nach einem der Ansprüche 6 bis 9, dadurch gekennzeichnet, daß die Stufe a) bei einer Temperatur von $-5$ bis $+90\,°C$ durchgeführt wird.

11. Verfahren nach einem der Ansprüche 6 bis 10, dadurch gekennzeichnet, daß dem Polymer eine Molzahl an Silylmetallocen je Mol Polymer, die gleich der Anzahl der in einem Mol des Polymers enthaltenen Vinylbindungen ist, an die das Silylmetallocen angelagert werden soll, und ein etwa 10-%iger Überschuß zugegeben wird.

12. Verfahren nach einem der Ansprüche 6 bis 11, dadurch gekennzeichnet, daß die in Stufe b) verwendete, nichtlösende Verbindung unter Methanol, Ethanol, Aceton oder einem Aceton-Methanol-Gemisch gewählt wird.

13. Fester Treibsatz mit insbesondere einem inerten Bindemittel, einem Oxidationsmittel, einem Treibstoff, einem Weichmacher und Zusätzen, dadurch gekennzeichnet, daß das inerte Bindemittel aus mindestens einem Polymer nach einem der Ansprüche 1 bis 5 besteht.

14. Treibsatz nach Anspruch 13, dadurch gekennzeichnet, daß das Polymer ein Polybutadien mit endständigen Hydroxyl- oder Carboxylgruppen ist und von 0,2 bis 4 Gew.-% zugegebenem Metall je Mol Polymer enthält.

15. Treibsatz nach Anspruch 14, dadurch gekennzeichnet, daß das inerte Bindemittel das vorstehende Polymer ist.

16. Treibsatz nach Anspruch 14, dadurch gekennzeichnet, daß die vom Polymer getragenen Silylmetallocengruppen Silylferrocengruppen mit einem Eisengehalt im Polymer von 3 bis 15% sind.